# EUROPEAN PATENT SPECIFICATION

(11) **EP 1 205 234 B1**
(45) Date of publication and mention of the grant of the patent: **17.03.2010**
(21) Application number: 99923975.9
(22) Date of filing: 09.06.1999
(51) Int. Cl.: B01D 53/86, B01J 23/70, B01J 23/38, B01J 23/16

(54) **METHOD AND APPARATUS FOR DISPOSING OF FLUORINE-CONTAINING COMPOUND BY DECOMPOSITION**
VERFAHREN UND VORRICHTUNG ZUM ENTFERNEN VON FLUORHALTIGEN VERBINDUNGEN DURCH ZERSETZUNG
PROCEDE POUR L'ELIMINATION DE COMPOSES FLUORES PAR DECOMPOSITION

(43) Date of publication of application: 15.05.2002
(73) Proprietor: Hitachi, Ltd., Tokyo 100-8280 (JP)
(72) Inventor: Kanno, Shuichi, Hitachi Res. Lab., Hitachi, Ltd., Ibaraki 319-1221 (JP); Honji, Akio, Hitachi Res. Lab., Hitachi, Ltd., Ibaraki 319-1221 (JP); Yamashita, Hisao, Hitachi Res. Lab., Hitachi, Ltd., Ibaraki 319-1221 (JP); Azuhata, Shigeru, Hitachi Res. Lab., Hitachi, ltd., Ibaraki319-1221 (JP); Tamata, Shin, Hitachi Works, Hitachi, Ltd., Ibaraki 317-0073 (JP); Irie, Kazuyoshi, Hitachi Works, Hitachi, Ltd., Ibaraki 317-0073 (JP)
(74) Representative: Beetz & Partner
(86) International application number: PCT/JP1999/003074
(87) International publication number: WO 2000/074821

(56) References cited:
- EP-A- 0 431 351
- GB-A- 2 295 101
- JP-A- 4 290 527
- JP-A- 10 286 439
- JP-A- 11 070 322
- JP-A- 11 123 331
- JP-A- 51 049 190
- JP-A- 52 026 390
- JP-A- 59 092 022
- US-A- 5 759 504
- PATENT ABSTRACTS OF JAPAN vol. 1996, no. 07, 31 July 1996 (1996-07-31) & JP 08 057255 A (HITACHI LTD), 5 March 1996 (1996-03-05)
- PATENT ABSTRACTS OF JAPAN vol. 1997, no. 01, 31 January 1997 (1997-01-31) & JP 08 238418 A (HITACHI LTD), 17 September 1996 (1996-09-17)

## Description

### FIELD OF THE INVENTION

The present invention relates to a process and an apparatus for the decomposition of fluorine compound such as PFCₛ (perfluorocarbons, HFC₅ (hydrofluorocarbons), SF₆ and NF₃. More particularly, the invention relates to a process and an apparatus for the decomposition of fluorine compounds wherein gaseous substances, such as carbon monoxide (CO), N₂O and SO₂F₂ (sulfuryl fluoride), are generated upon the decomposition, particularly hydrolysis, of the fluorine compounds over a catalyst.

Examples of the fluorine compounds that generate gaseous substances, such as carbon monoxide (CO), N₂O and SO₂F₂, upon the decomposition of the fluorine compounds over a catalyst include PFC such as C₂F₆ and CF₄, HFC such as CHF₃, SF₆ and NF₃. These fluorine compounds are used as semiconductor etching gases and semiconductor cleaning gases. SF₆ gas is also used as an insulating medium for circuit breakers. The process and the apparatus for the decomposition of fluorine compounds according to the invention are suitable for the decomposition of waste fluorine compounds in these fields.

### BACKGROUND OF THE INVENTION

Hydrolysis is one of the processes for the decomposition of fluorine compounds, such as PFC and HFC. In this process, water is added to the gaseous fluorine compounds to hydrolyse them, and fluorine contained in the fluorine compounds is converted to hydrogen fluoride (HF), which is subsequently absorbed by water or an alkaline aqueous solution.

JP 1998-192653 A discloses a process in which water vapor is added to C₂F₆ gas or NF₃ gas, which are kinds of the fluorine compounds, and the fluorine compounds are brought into contact with a catalyst containing alumina, titania, silica and or zirconia at a temperature of 400°C to 800°C to hydrolyze the fluorine compounds. The publication discloses that when an oxidative gas, such as oxygen, is contained upon conducting hydrolysis, an oxidation reaction of carbon monoxide (CO), which is formed during the hydrolysis reaction, can be simultaneously induced. It also discloses that after removing hydrogen fluoride from the gas formed by the hydrolysis, the remaining gas may be brought into contact with a CO oxidation catalyst to oxidize CO to CO₂.

It is also known that organic halogen compounds containing halogen, such as chlorine, fluorine and bromine, can be simultaneously subjected to both hydrolysis and oxidative decomposition as disclosed in Japanese Patent JP 1992-122419 A and JP 1993-220346 A. These publications specifically disclose processes for the decomposition of chlorine compounds such as Freon and PCB.

In the case where an organic fluorine compound such as PFC and HFC, is hydrolyzed, CO gas is formed associated with hydrogen fluoride. Therefore, CO gas is necessarily produced upon hydrolysis of organic fluorine compounds. JP 1998-192653 A discloses that CO is oxidized to CO₂ in the presence of an oxidative gas upon hydrolysis of fluorine compounds, or in alternative, CO is oxidized with a catalyst after removing hydrogen fluoride from the gas formed by hydrolysis. However, as a result of investigations conducted by the inventors, the removal of CO only by contacting with oxygen or air upon hydrolysis of the fluorine compounds is limited. Furthermore, the process of contacting a gas formed by hydrolysis with a CO oxidation catalyst after removing hydrogen fluoride exhibits a poor efficiency because the high temperature gas formed by hydrolysis is cooled to room temperature for removing hydrogen fluoride and is then again heated.

The inventors have found that in the case where a fluorine compound such as SF₆ and NF₃ is decomposed over a catalyst, the same problem occurs as in the case of decomposition of PFC and HFC. Specifically, it has been found that when SF₆ or NF₃ is hydrolyzed, SO₂F₂ or N₂O is produced together with hydrogen fluoride as a by-product. These by-products are also to be decomposed.

JP 1998-286439 A discloses a process for the decomposition of gaseous fluorine-containing compounds such as CF₄, C₂F₆ and C₃F₈, by contacting the compounds with molecular oxygen and water in the presence of a catalyst. There is the possibility of forming CO since the supplied amount of molecular oxygen is sufficient to convert the carbon content (carbon atoms) in the fluorine-containing compounds to carbon dioxide and carbon monoxide.

The above-cited patent applications JP 1998-192653 A JP 1998-286439 A, JP 1992-122419 A and JP 1993-220346 A fail to disclose the formation of SO₂F₂ or N₂O upon hydrolysis of SF₆ or NF₃, and also fail to disclose a process for removing these substances.

JP 08057255 A discloses a two-stage process for the decomposition of fluorocarbon-containing exhaust gases wherein the exhaust gas is mixed with oxygen and hydrolyzed in the presence of a first catalyst to form CO₂, HF, HCl and water, and, after removal of HF and HCl with Ca(OH)₂, unreacted fluorocarbons are decomposed by hydrolysis in a second stage in the presence of a second catalyst on the basis of TiO₂-W.

JP 08238418 A discloses a two-stage process for the decomposition of chlorofluorocarbons wherein, in a first stage, the chlorofluorocarbons are hydrolyzed at a first catalyst in the presence of oxygen to CO, CO₂, HF and HCl, and in the resulting gas, after removal of HF and HCl by scrubbing, CO is oxidized to CO₂ in the second stage with a second catalyst.

The generation of SO₂F₂ or N₂O through the hydrolysis reaction and their conversion into SO₃, HF and NH₃ is not mentioned in these documents.

EP 0 431 351 A1 relates to a single-step process for removing fluorine and/or fluorine-containing compounds from gases by contacting the gas in the presence of water with an active titanium dioxide comprising a high amount of hydroxy groups (methatitanic acid) and having a high specific BET surface of 30 to 350 m²/g, acting as a sorbent and a catalyst for the reduction of fluorine and the hydrolysis of the fluorine-containing compounds to hydrogen fluoride.

It is disclosed in this document that by the specific TiO₂ catalyst, no secondary noxious compounds are formed.

GB 2 295 101 A discloses a single-step process for the removal of halogenated organic compounds from an airstream by contacting it with a x-alumina catalyst. It is mentioned in this document that the decomposition products are normally carbon dioxide and/or carbon monoxide and the halo-acids corresponding to the halogens present.

### SUMMARY OF THE INVENTION

An objective of the invention is to provide a process and an apparatus for the decomposition of fluorine compounds such as PFCs (perfluorocarbons), HFCs (hydrofluorocarbons), SF₆ and NF₃, generating gaseous substances such as CO, SO₂F₂ and N₂O, formed upon the decomposition of the fluorine compounds with a high efficiency under such a state that the gaseous compounds still contain hydrogen fluoride.

Another object of the invention is to provide a process and an apparatus for the decomposition of and removing SO₂F₂.

The above problems are solved according to the independent claims. The dependent claims relate to preferred embodiments.

The process of the present invention for the decomposition of fluorine compounds, such as PFCs (perfluorocarbons), HFCs (hydrofluorocarbons), SF₆ and NF₃, comprises:
(A) introducing water vapor and an inert diluent gas to the fluorine compounds,
(B) contacting the gas mixture with a first catalyst for decomposing the fluorine compounds,
(C) contacting the gas resulting from (B) with a second catalyst for decomposing harmful substances, such as CO, N₂O and SO₂F₂,
   and
(D) subjecting the gas resulting from (C) to gas scrubbing with water or an alkaline aqueous solution to remove hydrogen fluoride and other water-soluble component contained in the gas,
wherein
- oxygen or an oxygen-containing gas is introduced
   into the gas resulting from stage (B) and flowing into stage (C),
- the first catalyst for decomposing the fluorine compounds is Al-Ni-oxide, Al-Zn-oxide or Al-Ti-oxide,
- the second catalyst for decomposing harmful substances comprises a carrier selected from alumina, titania and zirconia and contains at least one of Pd, Pt, Cu, Mn, Fe, Co, Rh, Ir and Au is the form of a metal organ oxide, or is titania coated with tungsten oxide,
   and
- the first catalyst and the second catalyst are kept with a common heater at the same reaction temperature.

The apparatus of the present invention for the decomposition of fluorine compounds, such as PFCs (perfluorocarbons), HFCs (hydrocarbons), SF₆ and NF₃, comprises:
- a reactor being connected to the fluorine compound supply an inert gas supplying unit, a water vapor supplying unit an inert gas supplying unit, a water vapor supplying unit and an oxygen supplying unit for introducing oxygen or an oxygen-containing gas and comprising a first catalyst for decomposing the flurorine compounds and a second catalyst for decomposing harmful substances, such as CO, N₂O and SO₂F₂, charged therein, and a heater for heating the first catalyst, the first catalyst being provided upstream of the second catalyst,
   and
- a gas scrubbing tower connected to the reactor and comprising spray nozzles for contacting the gas discharged from the reactor with water or an alkaline aqueous solution for removing hydrogen fluoride and other water-soluble compounds from the gas,
wherein
- the oxygen supplying unit is provided upstream of the second catalyst and downstream of the first catalyst,
- the first catalyst is Al-Ni-oxide, Al-Zn-oxide or Al-Ti-oxide,
- the second catalyst comprises a carrier selected from alumina, titania and zirconia and contains at least one of Pd, Pt, Cu, Mn, Fe, Co, Rh, Ir and Au in the form of a metal or an oxide, or is titania coated with tungsten oxide,
   and
- the heater is common to the first catalyst and the second catalyst and is adapted to keep the first catalyst and the second catalyst at the same temperature.

The second catalyst for the decomposition of harmful components preferably further contains at least one oxide selected from La and Ba, whereby the heat resistance is improved.

In the second catalyst, the amount of at least one selected from Cu, Mn, Fe and Co carried on the carrier is preferably 0.1 to 20 wt% as an amount of an oxide based on the weight of the carrier. The amount of at least one selected from Pd, Pt, Rh, Ir and Au carried on the carrier is preferably 0.05 to 2 wt% as an amount of a metal based on the weight of the carrier.

The amount of at least one oxide selected from La and Ba carried on the carrier is also preferably 0.1 to 20 wt%, based on the weight of the carrier.

Examples of preferred harmful component removing second catalysts include catalysts of Pd and La carried on alumina, catalysts of Pt and La carried on alumina, catalysts of Rh and La carried on alumina, catalysts of Au and La carried on alumina, catalysts of Ir and La carried on alumina, catalysts of Pd carried on alumina, catalysts of Pt carried on alumina, catalysts of Cu carried on alumina, catalysts of Mn carried on alumina, catalysts of Pd and W carried on titania and catalysts of Co carried on alumina.

The gas having been decomposed by contacting with the second catalyst is preferably put through water or an alkaline aqueous solution to remove water-soluble components contained in the gas, such as hydrogen fluoride. Examples of the alkaline aqueous solution include those of sodium hydroxide and calcium hydroxide.

According to the invention, fluorine contained in fluorine compounds such as PFC, HFC, SF₆ and NF₃, is converted to HF, and CO, SO₂F₂ and N₂O formed associated with the decomposition of the fluorine compounds can also be decomposed. It is considered that CO is oxidized to CO₂, SO₂F₂ is decomposed to SO₃ and HF, and N₂O is decomposed to NO₂ or NO.

Examples of fluorine compounds that generate CO upon hydrolysis include PFCS, such as CF₄, C₂F₆, C₃F₈, C₄F₈, C₅F₈ and CHF₃, and HFCS, such as C₂H₂F₄. Examples of fluorine compounds that generate SO₂F₂ upon hydrolysis include SF₆. Examples of fluorine compounds that generate N₂O upon hydrolysis include NF₃. The invention can be applied to the decomposition process of these fluorine compounds. However, the invention is not limited to these fluorine compounds.

The oxidation of CO also proceeds upon decomposing the fluorine compounds. Therefore, there is an effect in that the activity of the second catalyst is hard to be deteriorated. According to the invention, the cost for heating the gas can be reduced because the gas amount can be decreased in comparison to the introduction of oxygen into the gas before the first catalyst.

Examples of the factors exerting an influence on the decomposition of fluorine compounds include the concentration of the fluorine compounds in the gas to be processed, the amount of moisture, the reaction temperature, the material of the catalyst, the preparation method of the catalyst and the space velocity. The space velocity is a value obtained by dividing the gas flow amount (ml/h) upon passing the gas to be processed through the catalyst by the catalyst amount (ml).

The concentration of the fluorine compounds in the gas to be processed is preferably in the range of 0.1 to 5 vol%. When the concentration of the fluorine compounds in the gas to be processed is too large, a high decomposition rate cannot be obtained. In order to adjust the concentration of the fluorine compounds, an inert gas, such as nitrogen, argon and helium, is added.

The moisture is necessarily added in such an amount that hydrogen atoms are present in the same number or more as the number of fluorine atoms contained in the fluorine compounds, and it is preferably 5 to 75 times the concentration of the fluorine compounds. When the amount of water is too small, decomposition of the fluorine compounds does not proceed.

The reaction temperature is preferably in the range of 650°C to 850°C. When the reaction temperature is too low, only a low decomposition rate is obtained. Even when the reaction temperature is increased beyond 850°C, the reaction rate is substantially not improved.

As the first fluorine compounds decomposition catalyst, a catalyst containing a combination of aluminum and nickel, a combination of aluminum and zinc, or a combination of aluminum and titanium is used in the form of an oxide. The oxide is mainly formed from alumina with nickel oxide, zinc oxide or titanium oxide, and a mixed oxide(composite oxide), such as NiAl₂O₄, may also be used. Among the three catalysts listed in the foregoing, the catalyst containing a combination of aluminum and nickel in the form of an oxide is the most preferred. As for the composition of the aluminum-nickel catalyst, the molar ratio Ni/Al is preferably in the range of 50/50 to 1/99.

The preparation of the first catalyst may be conducted by either the precipitation method, the impregnation method or the kneading method, which have been known in the art. Examples of the raw materials for preparing the catalyst include nitrates, ammine complexes, ammonium salts, chlorides and sulfates. The catalyst may be used in a granular form or a honeycomb form, or in alternative, coated on the surface of a honeycomb or a plate formed of ceramics or a metal. The catalyst can be formed into a granular form or a honeycomb form by an extrusion method, a tablet punching method or a rolling granulation method.

The space velocity (SV) upon contacting the gas to be processed with the first catalyst is preferably 100 to 10,000/h, and more preferably 100 to 1,500/h, for obtaining a high decomposition rate.

It is sufficient that the amount of oxygen in the gas to be processed is 0.2 to 15 vol% in the case where the concentration of the fluorine compounds is 0.1 to 5 vol% although it depends on the amount of the fluorine compounds to be decomposed since the object of addition of oxygen is to oxidize CO.

The second catalyst can also be prepared in a similar manner as the preparation of the first catalyst. The precipitation method, the impregnation method and the kneading method having been known can be applied. Examples of the raw materials for preparing the catalyst include nitrates, an ammine complexes, ammonium salts, chlorides and sulfates. The catalyst may be used in a granular form or a honeycomb form, or in alternative, coated on the surface of a honeycomb or a plate formed of ceramics or a metal. The second catalyst is particularly preferably prepared by impregnating a granular carrier with a solution containing Pd or Pt, followed by drying and baking. The second catalyst is preferably used after eventually baking at a temperature of 600°C to 850°C, so as to suppress a decrease in the catalyst activity during use due to aggregation of granules. In the case where titania is used as the carrier, it is preferred that the surface of the titania is coated with tungsten oxide since titania is liable to poisoning with fluorine.

The process for the decomposition of fluorine compounds according to the invention is suitable for the decomposition of fluorine compounds contained in an exhaust gas from a semiconductor etching line. The concentration of fluorine compounds in the exhaust gas from a semiconductor etching line is generally 0.5 to 5 vol%, and the balance is mainly N₂ The exhaust gas from a semiconductor etching line is added with air and water, and then is brought into contact with the first catalyst and the harmful component removing catalyst, whereby the fluorine compounds contained in the exhaust gas from a semiconductor etching line is converted to HF, and CO, SO₂F2 and N₂O can also be removed.

The apparatus for the decomposition of fluorine compounds according to the invention will be described below.

One embodiment of the apparatus for the decomposition of fluorine compounds according to the invention comprises a reactor having a first catalyst for decomposing the fluorine compounds and a second catalyst for removing harmful components charged therein, a heater for heating the catalysts in the reactor; a moisture supplying unit for adding moisture to the fluorine compounds supplied to the reactor, and an inert gas supplying unit for adding an inert gas as a diluent gas.

The apparatus further comprises an oxygen supplying unit for adding oxygen or an oxygen-containing gas to the gas stream that flows out from the first catalyst and flows in the second catalyst.

The apparatus for the decomposition of fluorine compounds according to the invention may further comprise a gas scrubbing tower operated with water or an alkaline aqueous solution. The gas scrubbing tower is provided in the subsequent stage of the reactor. In order to make the gas be in well contact with water or an alkaline aqueous solution in the gas scrubbing tower, plastic particles, such as polypropylene, may be charged therein.

A pre-heater for pre-heating the gas to be processed containing the fluorine compounds may be provided upstream of the reactor. The pre-heater may have such a simple structure that a heater is provided outside the vessel. In the case where the apparatus of the invention is applied to processing of a fluorine compounds-containing gas having been used for an etching treatment of semiconductors, a pre-treatment tower for removing water-soluble components contained in the etching exhaust gas is preferably provided upstream of the pre-heater. The pre-treatment tower may have a simple structure containing a device for spraying water into the etching exhaust gas.

A cooling chamber for cooling the exhaust gas discharged from the reactor may be provided between the reactor and the gas scrubbing tower. The cooling chamber preferably has a spray nozzle for spraying water or an alkaline aqueous solution. Since the absorbing rate of hydrogen fluoride in the gas scrubbing tower is higher when the gas temperature is lower, it is effective to cool the gas discharged from the reactor before supplying to the gas scrubbing tower.

### BRIEF DESCRIPTION OF THE DRAWINGS

Fig. 1 is a schematic diagram showing an apparatus for the decomposition of fluorine compounds which does not fall under the claims, but serves for explaining the two-stage catalytic processing of gases containing fluorine compounds.
Fig. 2 is a graph showing the relationship between the SO₂F₂ gas concentration in an exhaust gas scrubbing tower and the reaction time for the decomposition of SF₆.
Fig. 3 is a graph showing the relationship between the CO concentration in an exhaust gas scrubbing tower and the reaction time for the decomposition of a mixed gas of CF₄ and CHF₃.
Fig. 4 is a graph showing the relationship between the CO concentration in an exhaust gas scrubbing tower and the reaction time for the decomposition of C₂F₆.
Fig. 5 is a graph showing the relationship between the CO concentration in an exhaust gas scrubbing tower and the reaction time for the decomposition of C₄F₈.
Fig. 6 is a graph showing the relationship between the CO concentration in an exhaust gas scrubbing tower and the reaction time for the decomposition of C₃F₈.
Fig. 7 is a graph showing the relationship between the CO concentration in an exhaust gas scrubbing tower and the reaction time for the decomposition of C₅F₈.
Fig. 8 is a graph showing the CO concentration, in an exhaust gas scrubbing tower upon the decomposition of C₄F₈ with various materials for the second catalyst.
Fig. 9 is a schematic diagram showing an embodiment of an apparatus for the decomposition of fluorine compounds according to the invention provided on a semiconductor etching line.

### DETAILED DESCRIPTION OF PREFERRED EMBODIMENTS

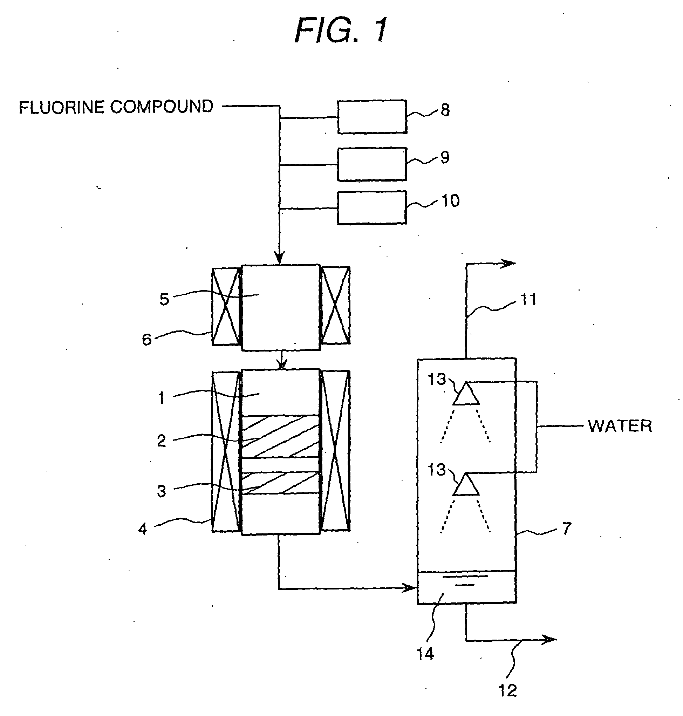

An apparatus for decomposing fluorine compounds having the structure shown in Fig. 1 was produced, and experiments for the decomposition of fluorine compounds were conducted. The apparatus shown in Fig. 1 comprises a reactor 1, a pre-heater 5, a nitrogen gas supplying unit 8 for adding nitrogen gas to the fluorine compounds, an oxygen supplying unit 9 for adding oxygen or an oxygen-containing gas to the fluorine compounds, a pure water supplying unit 10 for adding pure water to the fluorine compounds, and a gas scrubbing tower 7 for scrubbing the gas stream flowing out from the reactor 1 with water. The pre-heater 5 has a heater 6, and the reactor 1 has a heater 4. The reactor 1 contains a first catalyst 2 and a second catalyst 3. The gas scrubbing tower 7 has spray nozzles 13 for spraying water. In the gas scrubbing tower 7, water 14 absorbing hydrogen fluoride and other water-soluble components accumulates at the bottom part of the gas scrubbing tower 7 and is then discharged to the outside of the gas scrubbing tower 7 through a drain pipe 12. The gas, from which hydrogen fluoride has been removed in the gas scrubbing tower 7, is discharged to the outside of the gas scrubbing tower 7 through a gas discharging pipe 11.

### REFERENCE EXAMPLE 1

A decomposition treatment of SF₆ was conducted by using an apparatus shown in Fig. 1. An aluminum-nickel catalyst was used as first catalyst 2. The composition of the catalyst was such that the molar ratio Al/Ni was 80/20. The catalyst was prepared in the following manner. Commercially available boehmite powder was dried and calcinated at a temperature of 120°C for 1 hour. An aqueous solution obtained by dissolving 210.82 g of nickel nitrate hexahydrate was added to 200g of the powder, followed by mixing and kneading. Thereafter, the mixture was baked at a temperature of 250°C to 300°C for about 2 hours and calcinated at a temperature of 700°C for 2 hours. After calcination, pulverization and classification were conducted to obtain a particle diameter of 0.5 to 1 mm. A catalyst containing aluminum and nickel in the form of an oxide was thus obtained.

A catalyst containing Pd and La carried on alumina was used as second catalyst 3. The preparation method of the second catalyst is as follows. Commercially available granular alumina having a particle diameter of from 2 to 4 mm (NKHD-24, produced by Sumitomo Chemical Industries, Ltd.) was impregnated with La₂O₃ to such an extent that La₂O₃ was contained in an amount of 10 wt% based on the weight of alumina. Specifically, an aqueous solution obtained by dissolving 26.84 g of lanthanum nitrate hexahydrate in pure water was added to 100 g of alumina to conduct impregnation with La. Thereafter, it was calcinated at 120°C for 2 hours and then further calcinated at 700°C. The resulting Lacarried on alumina was impregnated with Pd to such an extent that Pd is contained in an amount of 0.5 wt% based on the weight of the Lacarried on alumina. That is, 100 g of Lacarried on alumina were impregnated with an aqueous solution obtained by dissolving 11.26 g of a palladium nitrate solution containing 4.439 wt% of Pd in pure water. Thereafter, it was calcinated at 120°C for 2 hours and then further calcinated at 700°C. A catalyst comprising Pd and Lacarried alumina was thus obtained.

An experiment of a decomposition treatment of SF₆ was firstly conducted without charging the second catalyst 3, and then conducted with the second catalyst charged therein. The SF₆ gas was added with nitrogen and oxygen and further added with pure water by using a microtube pump. In the gas to be processed, the SF₆ concentration was 0.5 vol%, the O₂ concentration was 4 vol%, and the water vapor concentration was 37.5 vol% (75 times the molar number of SF₆) . The gas to be processed was supplied to the reactor 1 heated and maintained at a temperature of 750°C. The space velocity (SV) of the gas to be processed was 1000 h⁻¹ at the first catalyst 2 and 5000 h⁻¹ at the second catalyst 3. The gas flowing out from the reactor 1 was supplied to the gas scrubbing tower 7 to absorb HF and other water-soluble components, such as SO₃, in water. The SO₂F₂ concentration of the exhaust gas flowing out from the gas scrubbing tower 7 was measured by TCD (thermal conductivity detector) gas chromatography. The SF₆ concentration of the gas was measured by TCD gas chromatography. The TCD gas chromatograph used had a detection limit for SO₂F₂ of 5 ppm.

SF₆ was treated with the first catalyst containing aluminum and nickel as an oxide, SF₆ conversion was obtained more then 80% and was substantially constant from the initial stage of the experiment to the time after 2000 hours.

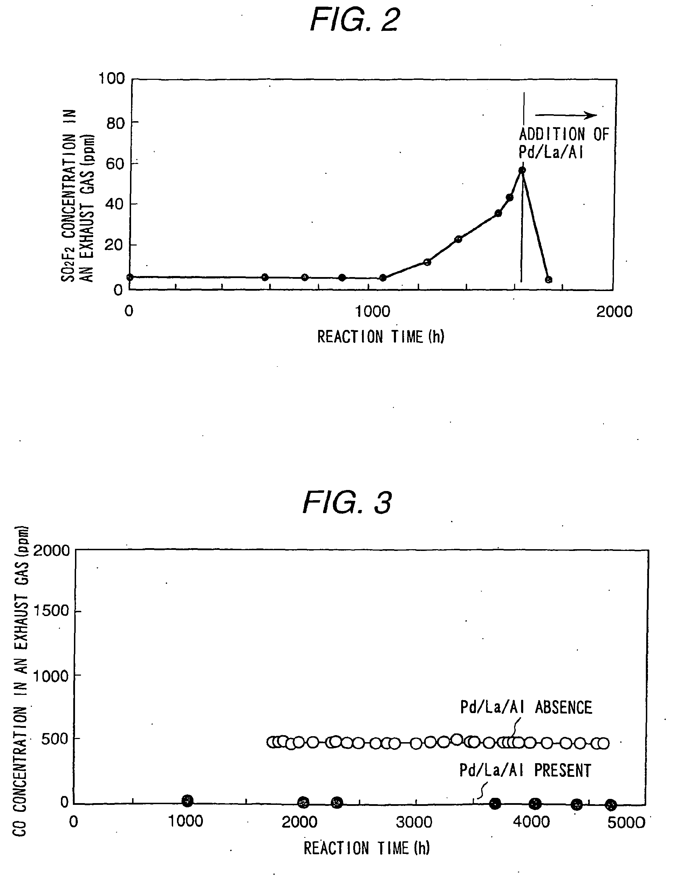

Fig. 2 shows the relationship between the SO₂F₂ concentration and the reaction time. The SO₂F₂ concentration was lower than 5 ppm, the detection limit, from the initial stage of the experiment to the time after 1000 hours, but was quickly increased beyond 1000 hours, and 57 ppm were detected after 1600 hours. The experiment was further continued after charging the second catalyst 3. As a result, the SO₂F₂ concentration was decreased to a level lower than 5 ppm. It has been confirmed from the foregoing that the Pd and La-carrying alumina catalyst is effective to decompose SO₂F₂ in the presence of hydrogen fluoride.

### REFERENCE EXAMPLE 2

A mixed gas of CF₄ and CHF₃ was decomposed using the apparatus shown in Fig. 1. A mixed gas of CF₄ and CHF₃ is often used as an etching gas for semiconductor manufacturing. The first catalyst 2 was the same as that used in Reference Example 1. The second catalyst 3 was the same as that used in Reference Example 1 except that commercially available granular alumina having a particle diameter of 2 to 4 mm (NKHD-24 produced by Sumitomo Chemical Industries, Ltd.) was pulverized to a diameter of 0.5 to 1 mm, followed by drying in the air at 120°C for 2 hours. In the gas to be processed, the CF₄ concentration was 0.25 vol%, the CHF₃ concentration was 0.25 vol%, the O₂ concentration was 4 vol%, and the water vapor concentration was 25 vol%. The reaction temperature was 700°C. The experiment was conducted for two cases, i.e., only the first catalyst 2 was charged in the reactor 1, but the second catalyst 3 was not charged, and both the first catalyst 2 and the second catalyst 3 were charged in the reactor 1. The space velocity of the gas to be processed was 1000 h⁻¹ at the first catalyst 2 and 10,000 h⁻¹ at the second catalyst 3. The CO concentration of the exhaust gas flowing out from the gas scrubbing tower 7 was measured by TCD gas chromatography. The TCD gas chromatograph used had a detection limit for CO of 1 ppm.

Fig. 3 shows the relationship between the reaction time from the start of the experiment and the CO concentration. The CO concentration was as large as about 500 ppm when the treatment was conducted only with the aluminum-nickel catalyst, but the CO concentration could be decreased to a level that could not be detected by the TCD gas chromatograph by providing the Pd and La-carrying alumina catalyst.

### REFERENCE EXAMPLE 3

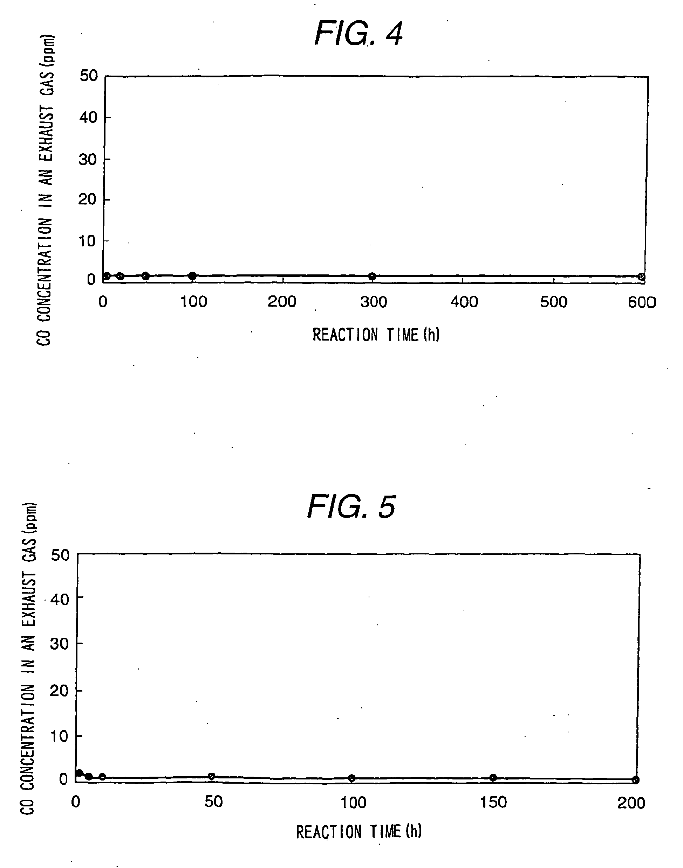

C₂F₆ was decomposed by using the apparatus shown in Fig. 1. The first catalyst 2 and the second catalyst 3 used were the same as those used in Reference Example 1. In the gas to be processed, the C₂F₆ concentration was 0.5 vol%, the oxygen concentration was 4 vol%, and the water vapor concentration was 25 vol%. The reaction temperature was 750°C. The space velocity was the same as in Reference Example 1. As a result, as shown in Fig. 4, the CO concentration in the exhaust gas flowing out from the gas scrubbing tower was constantly about 1 ppm from the initial stage of the treatment to the time after 600 hours.

### REFERENCE EXAMPLE 4

C₄F₈ was decomposed by using the apparatus shown in Fig. 1. The first catalyst 2 and the second catalyst 3 used were the same as those used in Reference Example 1. In the gas to be processed, the C₄F₈ concentration was 0.2 vol%, the oxygen concentration was 4 vol%, and the water vapor concentration was 10 vol%. The reaction temperature was 800°C. The space velocity was the same as in Reference Example 1. As a result, as shown in Fig. 5, the CO concentration in the exhaust gas flowing out from the gas scrubbing tower was constantly about 1 ppm from the initial stage of the treatment to the time after for 200 hours.

### REFERENCE EXAMPLE 5

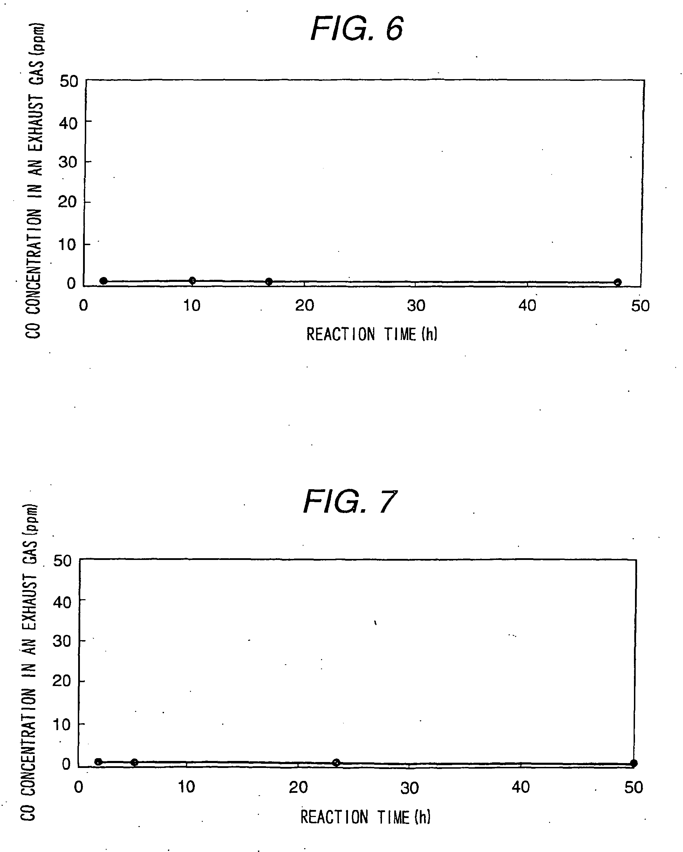

C₃F₈ was decomposed by using the apparatus shown in Fig. 1. The first catalyst 2 and the second catalyst 3 used were the same as those used in Reference Example 1. In the gas to be processed, the C₃F₈ concentration was 0.2 vol%, the oxygen concentration was 4 vol%, and the water vapor concentration was 10 vol%. The reaction temperature was 800°C. The space velocity was the same as in Reference Example 1. As a result, as shown in Fig. 6, the CO concentration in the exhaust gas flowing out from the gas scrubbing tower was constantly about 1 ppm from the initial stage of the treatment to the time after lapsing for 48 hours.

### REFERENCE EXAMPLE 6

C₅F₈ was decomposed by using the apparatus shown in Fig. 1. The first catalyst 2 and the second catalyst 3 used were the same as those used in Reference Example 1. In the gas to be processed, the C₅F₈ concentration was 0.2 vol%, the oxygen concentration was 4 vol%, and the water vapor concentration was 10 vol%. The reaction temperature was 800°C. The space velocity was the same as in Reference Example 1. As a result, as shown in Fig. 7, the CO concentration in the exhaust gas flowing out from the gas scrubbing tower was constantly about 1 ppm from the initial stage of the treatment to the time after lapsing for 50 hours.

### REFERENCE EXAMPLE 7

A fluorine compounds containing C₄F₈ was decomposed by using the apparatus shown in Fig. 1 while the material of the second catalyst 3 was changed. The first catalyst 2 was the same as that used in Reference Example 1. In the gas to be processed, the C₄F₈ concentration was 0.5 vol%, the oxygen concentration was 4 vol%, and the water vapor concentration was 25 vol%. The reaction temperature was 700°C. The space velocity was 1000 h⁻¹ at the fluorine compounds decomposition catalyst 2 and 3000 h⁻¹ at the harmful component removing catalyst 3.

The composition and the preparation method of the second catalyst 3 will be described below.

### (1) Pd and La-carring alumina catalyst

A Pd and La-carrying alumina catalyst was prepared in the same manner as in Reference Example 2.

### (2) Pt and La-carrying alumina catalyst

La carried on alumina was prepared in the same manner as in the preparation of the Pd and La-carrying alumina in Reference Example 2. The resulting La-carrying alumina was impregnated with Pt in such a manner that Pt was contained in an amount of 0.5 wt%, based on the weight of the La-carrying alumina. Specifically, 100 g of the La-carrying alumina were impregnated with a solution obtained by dissolving 11.08 g of a dinitrodiammine platinum nitric acid solution containing 4.514 wt% of Pt as a metal in pure water. Thereafter, it was dried at 120°C in the air for 2 hours and further calcinated at a temperature of 700°C in the air. As a result, a Pt and La-carrying alumina catalyst was obtained.

### (3) Rh and La-carrying alumina catalyst

The procedures for preparing La on alumina were the same as in Reference Example 2. The resulting La-carrying alumina was impregnated with Rh in such a manner that Rh was contained in an amount of 0.5 wt% of the weight of the La-carrying alumina. That is, 100 g of the La-carrying alumina were impregnated with a solution obtained by dissolving 11.31 g of a rhodium nitrate solution containing 4.422 wt% of Rh as a metal in pure water. Thereafter, it was dried at a temperature of 120°C in the air for 2 hours and further calcinated at a temperature of 700°C. As a result, a Rh and La-carrying alumina catalyst was obtained.

### (4) Au and La-carrying alumina catalyst

The procedures for preparing La on alumina were the same as in Reference Example 2. The resulting La-carrying alumina was impregnated with Au in such a manner that Au was contained in an amount of 0.5 wt% of the weight of the La-carrying alumina. That is, 100 g of the La-carrying alumina were impregnated with a solution obtained by dissolving 10 g of chloroauric acid containing 50 g/l of gold as a metal in pure water. Thereafter, it was dried at a temperature of 120°C in the air for 2 hours and further calcinated at a temperature of 700°C. As a result, an Au and La-carrying alumina catalyst was obtained.

### (5) Ir and La-carrying alumina catalyst

The procedures for preparing La on alumina were the same as in Reference Example 2. The resulting La-carrying alumina was impregnated with Ir in such a manner that Ir was contained in an amount of 0.5 wt% of the weight of the La-carrying alumina. That is, 100 g of the La-carrying alumina were impregnated with a solution obtained by dissolving 10.74 g of a chloroiridic acid solution containing 4.656 wt% of Ir as a metal in pure water. Thereafter, it was dried at a temperature of 120°C in the air for 2 hours and further calcinated at a temperature of 700°C. As a result, an Ir and La-carrying alumina catalyst was obtained.

### (6) Pd-carrying alumina catalyst

Commercially available granular alumina having a particle diameter of from 2 to 4 mm (NKHD-24, produced by Sumitomo Chemical Industries, Ltd.) was pulverized to a diameter of 0.5 to 1 mm, and then dried in the air at 120°C for 2 hours. After drying, the alumina was impregnated with Pd in such a manner that Pd was contained in an amount of 0.5 wt% of the weight of the alumina. That is, 100 g of the alumina were impregnated with a solution obtained by dissolving 11.26 g of a palladium nitrate solution containing 4.439 wt% of Pd as a metal in pure water. Thereafter, it was dried at a temperature of 120°C in the air for 2 hours and further calcinated at a temperature of 700°C. As a result, a Pd-carrying alumina catalyst was obtained.

### (7) Pt-carrying alumina catalyst

Commercially available granular alumina having a particle diameter of 2 to 4 mm (NKHD-24, produced by Sumitomo Chemical Industries, Ltd.) was pulverized to a diameter of from 0.5 to 1 mm, and then dried in the air at 120°C for 2 hours. After drying, the alumina was impregnated with Pt in such a manner that Pt was contained in an amount of 0.5 wt% of the weight of the alumina. That is, 100 g of the alumina were impregnated with a solution obtained by dissolving 11.08 g of a dinitrodiammine platinum nitric acid solution containing 4.514 wt% of Pt as a metal in pure water. Thereafter, it was dried at a temperature of 120°C in the air for 2 hours and further calcinated at a temperature of 700°C. As a result, a Pt-carrying alumina catalyst was obtained.

### (8) Cu-carrying alumina catalyst

Commercially available granular alumina having a particle diameter of 2 to 4 mm (NKHD-24, produced by Sumitomo Chemical Industries, Ltd.) was pulverized to a diameter of from 0.5 to 1 mm, and then dried in the air at 120°C for 2 hours. After drying, the alumina was impregnated with Cu in such a manner that CuO was contained in an amount of 10 wt% of the weight of the alumina. That is, 100 g of the alumina were impregnated with an aqueous solution obtained by dissolving 30.4 g of copper nitrate trihydrate in pure water. Thereafter, it was dried at a temperature of 120°C in the air for 2 hours and further calcinated at a temperature of 700°C. As a result, a Cu-carrying alumina catalyst was obtained.

### (9) Mn-carrying alumina catalyst

Commercially available granular alumina having a particle diameter of 2 to 4 mm (NKHD-24, produced by Sumitomo Chemical Industries, Ltd.) was pulverized to a diameter of from 0.5 to 1 mm, and then dried in the air at 120°C for 2 hours. After drying, the alumina was impregnated with Mn in such a manner that Mn₂O₃ was contained in an amount of 10 wt% of the weight of the alumina. That is, 100 g of the alumina were impregnated with an aqueous solution obtained by dissolving 36.34 g of manganese nitrate hexahydrate in pure water. Thereafter, it was dried at a temperature of 120°C in the air for 2 hours and further calcinated at a temperature of 700°C. As a result, a Mn-carrying alumina catalyst was obtained.

### (10) Fe-carrying alumina catalyst

Commercially available granular alumina having a particle diameter of 2 to 4 mm (NKHD-24, produced by Sumitomo Chemical Industries, Ltd.) was pulverized to a diameter of from 0.5 to 1 mm, and then dried in the air at 120°C for 2 hours. After drying, the alumina was impregnated with Fe in such a manner that Fe₂O₃ was contained in an amount of 10 wt% of the weight of the alumina. That is, 100 g of the alumina were impregnated with an aqueous solution obtained by dissolving 50.59 g of iron nitrate nonahydrate in pure water. Thereafter, it was dried at a temperature of 120°C in the air for 2 hours and further calcinated at a temperature of 700°C. As a result, a Fe-carrying alumina catalyst was obtained.

### (11) Pd and W-carrying titania catalyst

Commercially available granular titania (CS-224, produced by Sakai Chemical Industry Co., Ltd.) was pulverized and classified to obtain particles having a diameter of 0.5 to 1 mm, and then heated to 120°C for 2 hours. 100 g of the resulting titania were impregnated with a hydrogen peroxide solution containing 82.2 g of ammonium paratungstate dissolved therein, and then again heated to 120°C for 2 hours and to 500°C for further 2 hours. 100 g of the resulting tungsten-carried titania were impregnated with a solution obtained by dissolving 11.26 g of a palladium nitrate solution containing 4.439 wt% of Pd as a metal. Thereafter, it was dried at a temperature of 120°C in the air for 2 hours and further calcinated at a temperature of 700°C. The amount of tungsten as WO₃ was 71.9 wt% of the titania.

### (12) Co-carrying alumina catalyst

Commercially available granular alumina having a particle diameter of from 2 to 4 mm (NKHD=24, produced by Sumitomo Chemical Industries, Ltd.) was pulverized to a diameter of from 0.5 to 1 mm, and then dried in the air at 120°C for 2 hours. After drying, the alumina was impregnated with Co in such a manner that Co₃O₄ was contained in an amount of 10 wt% of the weight of the alumina. That is, 100 g of the alumina were impregnated with an aqueous solution obtained by dissolving 36.23 g of cobalt nitrate hexahydrate in pure water. Thereafter, it was dried at a temperature of 120°C in the air for 2 hours and further calcinated at a temperature of 700°C. As a result, a Co-carrying alumina catalyst was obtained.

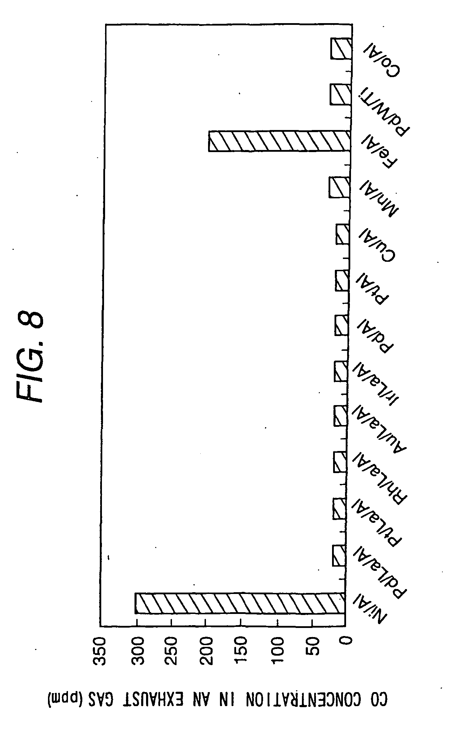

Fig. 8 is a graph showing the CO concentration after lapsing 1 hour from the start of the experiment in the case where the treatment is conducted by using only the first containing aluminum and nickel as an oxide (the bar on the extreme left) and the cases where the treatment is conducted by using both the first catalyst and the second catalyst. The measurement of the CO concentration was conducted by TCD gas chromatography.

It is understood from Fig. 8 that the CO concentration is remarkably high in the case of the Al-Ni catalyst containing aluminum and nickel as an oxide. The CO concentration was remarkably low in the case where both the first catalyst and the second catalyst were used, with the exception that the CO decomposition effect of the Fe-carrying alumina catalyst was poor in comparison to the other catalysts.

### REFERENCE EXAMPLE 8

A decomposition treatment of fluorine compounds containing C₂F₆ was conducted by using the apparatus shown in Fig. 1, comprising an Al-Zn catalyst containing aluminum and zinc as an oxide and a mixed oxide as the first catalyst 2 and a Pd and La-carrying alumina catalyst as the second catalyst 3. The experiment was also conducted for the case where the second catalyst 3 was not used. The material, the composition and the preparation method of the second catalyst 3 were the same as in Reference Example 2. In the gas to be processed, the C₂F₆ concentration was 0.5 vol%, the oxygen concentration was 4 vol%, and the water vapor concentration was 25 vol% at the inlet of the reactor 1. The reaction temperature was 750°C. The other conditions are the same as in Reference Example 1. The Al-Zn catalyst was prepared in the following manner. Commercially available boehmite powder was dried and calcinated at a temperature of 120°C for 1 hour. An aqueous solution obtained by dissolving 96.39 g of zinc nitrate hexahydrate was added to 126.65 g of the powder, followed by mixing and kneading. Thereafter, the mixture was dried at a temperature of 250 to 300°C for 2 hours and at a temperature of 700°C for 2 hours. After baking, pulverization and classification were conducted to obtain a particle diameter of 0.5 to 1 mm. A catalyst containing 85 mol% of Al and 15 mol% of Zn was thus obtained.

As a result of the experiment, the CO concentration of the gas flowing out from the gas scrubbing tower after lapsing one hour from the start of the treatment was about 350 ppm when the treatment was conducted by using only the Al-Zn catalyst, but was improved to 1 ppm when the Pd and La-carrying alumina catalyst was also used.

### REFERENCE EXAMPLE 9

A decomposition treatment of fluorine compounds containing C₂F₆ was conducted by using the apparatus shown in Fig. 1, comprising an Al-Ti catalyst containing aluminum and titanium as an oxide as the first catalyst 2 and a Pd and La-carrying alumina catalyst as the second catalyst 3. The experiment was conducted for both the cases where the second catalyst 3 was used and was not used. The material, the composition and the preparation method of the second catalyst 3 were the same as in Reference Example 8. The conditions, such as concentrations of the gas to be processed and the reaction temperature at the inlet of the reactor 1, were the same as in Reference Example 8. The Al-Ti catalyst was prepared in the following manner. Commercially available boehmite powder was dried and calcinated at a temperature of 120°C for 1 hour. 248.4 g of a titanium sulfate solution containing 30 wt% of titanium was mixed and kneaded with 200 g of the powder while pure water was added thereto. After mixing and kneading, the mixture was dried at a temperature of 250 to 300°C for about 5 hours and at a temperature of 700°C for 2 hours. The thus resulting powder was put in a metallic mold and subjected to compression molding at a pressure of 500 kgf/cm². The molded article was pulverized, and the powder was classified to obtain a particle diameter of from 0.5 to 1 mm. A catalyst containing 90 mol% of A1 and 10 mol% of Ti was thus obtained.

As a result of the experiment, the CO concentration of the gas flowing out from the gas scrubbing tower after lapsing one hour from the start of the treatment was about 320 ppm when the treatment was conducted by using only the Al-Ti catalyst, but was improved to 1 ppm when the Pd and La-carrying alumina catalyst was also used.

### EXAMPLE 1

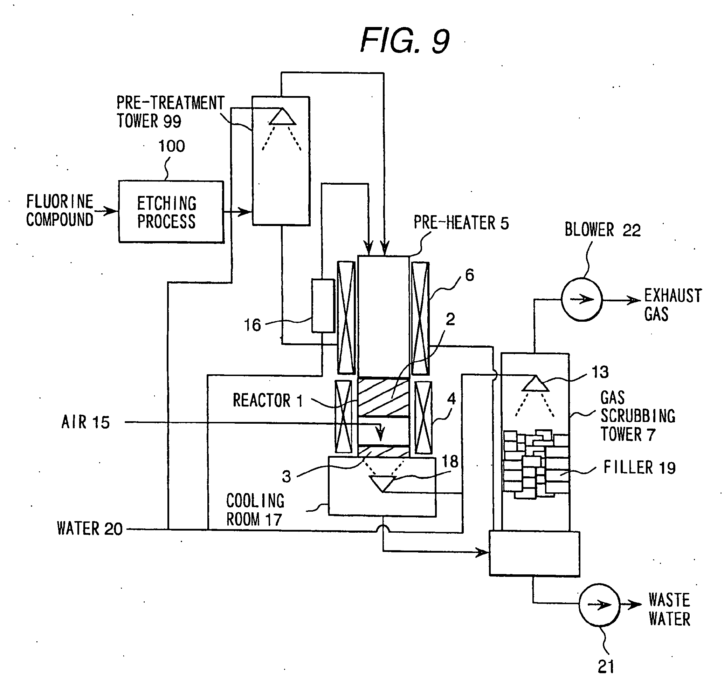

Fig. 9 is a schematic diagram showing an example, in which the apparatus for the decomposition of fluorine compounds according to the invention is provided on a semiconductor etching line.

In a semiconductor etching process 100, a gas comprising fluorine compounds such as SF₆ and mixed CF₄ and CHF₃ is introduced into an etching chamber of reduced pressure to excite a plasma which is allowed to react with a semiconductor wafer. Thereafter, the gas inside the etching chamber is sucked by a vacuum pump, at which the concentration of the fluorine compounds becomes about 0.5 to 5 vol% since nitrogen gas is flushed for protection of the pump. The apparatus for the decomposition of fluorine compounds according to the invention has a pre-treatment tower 99 for scrubbing the gas discharged from the etching chamber. Water soluble components contained in the gas are removed in the pre-treatment tower 99.

The gas having been treated in the pre-treatment tower 99 is fed to a pre-heater 5 for heating. Water 20 is also fed to the pre-heater 5. It is preferred that the water 20 is fed to the pre-heater after removing impurities, such as calcium, contained in the water by passing through an ion exchange resin 16. The concentration of the fluorine compounds is adjusted to a range of about 0.1 to 5 vol% at the pre-heater 5. The amount of water is adjusted to a range of about 5 to 75 times the molar number of the fluorine compounds. The amount of the air is adjusted to make the oxygen concentration be a range of about from 0.2 to 15 vol%. The gas to be processed having the concentrations thus adjusted is heated to a temperature of 650 to 850°C by using a heater 6, such as an electric furnace, and supplied to a reactor 1. A first catalyst 2 and a second catalyst 3 are charged in the reactor 1. It is preferred that the reactor 1 is also heated to a temperature of about from 650 to 850°C by a heater 4, such as an electric furnace. The gas to be treated supplied to the rector 1 is firstly brought into contact with the first catalyst 2, whereby the fluorine compounds react with water to decompose the fluorine compounds to hydrogen fluoride and carbon monoxide or SO₂F₂. Thereafter, the gas is brought into contact with the second catalyst 3, whereby carbon monoxide, carbon dioxide, SO₃ and SO₂F₂ are decomposed. The gas emitted from the reactor 1 is supplied to a cooling chamber 17 to cool, for example, by spraying water. The gas emitted from the cooling chamber 17 is supplied to a gas scrubbing tower 7 for scrubbing with water sprayed from a spray nozzle 13, whereby hydrogen fluoride and other water soluble components are removed. It is preferred that a filler 19 formed from plastic particles is filled in the gas scrubbing tower 7 to ensure contact of the gas with water. The water absorbing hydrogen fluoride and other water soluble components in the gas scrubbing tower 7 is discharged from the gas scrubbing tower 7 by sucking with a pump 21, followed by treating, for example, in a waste water treatment apparatus. The gas, from which hydrogen fluoride and other water soluble components are removed in the gas scrubbing tower 7, is discharged from the gas scrubbing tower 7 by sucking with a blower 22.

The point of the apparatus shown in Fig. 9 is that the air 15 is added to the gas supplied to the second catalyst 3 in the reactor 1. Thus the fluorine compounds are decomposed, and CO or SO₂F₂ formed by the decomposition of the fluorine compounds can also be removed.

## Claims

1. Process for the decomposition of fluorine compounds, such as PFCs (perfluorocarbons), HFCs (hydrofluorocarbons), SF₆ and NF₃, comprising:
(A) introducing water vapor and an inert diluent gas to the fluorine compounds,
(B) contacting the gas mixture with a first catalyst (2) for decomposing the fluorine compounds,
(C) contacting the gas resulting from (B) with a second catalyst (3) for decomposing harmful substances, such as CO, N₂O and SO₂F₂,
and
(D) subjecting the gas resulting from (C) to gas scrubbing with water or an alkaline aqueous solution to remove hydrogen fluoride and other water-soluble components contained in the gas,
wherein
- oxygen or an oxygen-containing gas is introduced into the gas resulting from stage (B) and flowing into stage (C),
- the first catalyst (2) for decomposing the fluorine compounds is Al-Ni-oxide, Al-Zn-oxide or Al-Ti-oxide,
- the second catalyst (3) for decomposing harmful substances comprises a carrier selected from alumina, titania and zirconia and contains at least one of Pd, Pt, Cu, Mn, Fe, Co, Rh, Ir and Au in the form of a metal or an oxide, or is titania coated with tungsten oxide,
and
- the first catalyst (2) and the second catalyst (3) are kept with a common heater (4) at the same reaction temperature.

2. Process according to claim 1, **characterized in that** the reaction temperature of the first catalyst (2) and the second catalyst (3) is kept in the range of 650 to 850 °C.

3. Process according to claim 1 or 2, **characterized in that** the second catalyst (3) further contains at least one oxide selected from La and Ba oxides.

4. Process according to any of claims 1 to 3, **characterized in that** the second catalyst (3) is selected from Pd and La on alumina, Pt and La on alumina, Rh and La on alumina, Au and La on alumina, Ir and La on alumina, Pd on alumina, Pt on alumina, Cu on alumina, Mn on alumina, Pd and W on titania and Co on alumina.

5. Process according to claim 4, **characterized in that** the second catalyst (3) is Pd and La (La₂O₃) on alumina.

6. Apparatus for the decomposition of fluorine compounds, such as PFCs (perfluorocarbons), HFCs (hydrofluorocarbons), SF₆ and NF₃, comprising:
- a reactor (1) being connected to the fluorine compound supply, an inert gas supplying unit, a water vapor supplying unit (20) and an oxygen supplying unit (15) for introducing oxygen or an oxygen-containing gas and comprising a first catalyst (2) for decomposing the fluorine compounds and a second catalyst (3) for decomposing harmful substances, such as CO, N₂O and SO₂F₂, charged therein, the first catalyst (2) being provided upstream of the second catalyst (3), and a heater (4) for heating the first catalyst (2),
and
- a gas scrubbing tower (7) connected to the reactor (1) and comprising spray nozzles (13) for contacting the gas discharged from the reactor (1) with water or an alkaline aqueous solution for removing hydrogen fluoride and other water-soluble compounds from the gas,
wherein
- the oxygen supplying unit (15) is provided upstream of the second catalyst (3) and downstream of the first catalyst (2),
- the first catalyst (2) is Al-Ni-oxide, Al-Zn-oxide or Al-Ti-oxide,
- the second catalyst (3) comprises a carrier selected from alumina, titania and zirconia and contains at least one of Pd, Pt, Cu, Mn, Fe, Co, Rh, Ir and Au in the form of a metal or an oxide, or is titania coated with tungsten oxide,
and
- the heater (4) is common to the first catalyst (2) and the second catalyst (3) and is adapted to keep the first catalyst (2) and the second catalyst at the same temperature.

7. Apparatus according to claim 6, **characterized in that** the second catalyst (3) is selected from Pd and Ca on alumina, Pt and La on alumina, Rh and La on alumina, Au and La on alumina, Ir and La on alumina, Pd on alumina, Pt on alumina, Cu on alumina, Mn on alumina, Pd and W on titania and Co on alumina.

8. Apparatus according to claim 6 or 7, **characterized in that** the second catalyst (3) is Pd and La (La₂O₃) on alumina.

9. Apparatus according to any of claims 6 to 8, **characterized in that** a pre-heater (5) is provided upstream of the reactor (1).

## Patentansprüche

1. Verfahren zur Zersetzung von Fluorverbindungen, wie PFCs (perfluorierten Kohlenwasserstoffen), HFCs (partiell fluorierten Kohlenwasserstoffen), SF₆ und NF₃, das folgende Stufen umfasst:
(A) Einführen von Wasserdampf und eines zur Verdünnung dienenden inerten Gases in die Fluorverbindungen,
(B) Inkontaktbringen des Gasgemisches mit einem ersten Katalysator (2) zur Zersetzung der Fluorverbindungen,
(C) Inkontaktbringen des aus (B) resultierenden Gases mit einem zweiten Katalysator (3) zur Zersetzung schädlicher Substanzen wie CO, N₂O und SO₂F₂
und
(D) Gaswäsche des aus (C) resultierenden Gases mit Wasser oder einer alkalischen wässerigen Lösung zur Entfernung von Fluorwasserstoff und anderen wasserlöslichen Bestandteilen, die im Gas enthalten sind,
wobei
- Sauerstoff oder ein Sauerstoff enthaltendes Gas in das aus Stufe (B) resultierende und in Stufe (C) strömende Gas eingeführt wird,
- der erste Katalysator (2) zur Zersetzung der Fluorverbindungen Al-Ni-Oxid, Al-Zn-Oxid oder Al-Ti-Oxid ist,
- der zweite Katalysator (3) zur Zersetzung der schädlichen Substanzen einen Träger aufweist, der unter Aluminiumoxid, Titanoxid und Zirkoniumoxid ausgewählt ist und mindestens eines der Metalle Pd, Pt, Cu, Mn, Fe, Co, Rh, Ir und Au in Form eines Metalls oder in Form eines Oxids enthält oder bei dem es sich um mit Wolframoxid beschichtetes Titanoxid handelt,
und
- der erste Katalysator (2) und der zweite Katalysator (3) durch eine gemeinsame Heizeinrichtung (4) auf der gleichen Reaktionstemperatur gehalten werden.

2. Verfahren nach Anspruch 1, **dadurch gekennzeichnet, dass** die Reaktionstemperatur des ersten Katalysators (2) und des zweiten Katalysators (3) im Bereich von 650 bis 850 °C gehalten wird.

3. Verfahren nach Anspruch 1 oder 2, **dadurch gekennzeichnet, dass** der zweite Katalysator (3) ferner mindesten ein Oxid enthält, das unter La-Oxid und Ba-Oxid ausgewählt ist.

4. Verfahren nach einem oder mehreren der Ansprüche 1 bis 3, **dadurch gekennzeichnet, dass** der zweite Katalysator (3) ausgewählt ist unter Pd und La auf Aluminiumoxid, Pt und La auf Aluminiumoxid, Rh und La auf Aluminiumoxid, Au und La auf Aluminiumoxid, Ir und La auf Aluminiumoxid, Pd auf Aluminiumoxid, Pt auf Aluminiumoxid, Cu auf Aluminiumoxid, Mn auf Aluminiumoxid, Pd und W auf Titanoxid sowie Co auf Aluminiumoxid.

5. Verfahren nach Anspruch 4, **dadurch gekennzeichnet, dass** der zweite Katalysator (3) aus Pd und La (La₂O₃) auf Aluminiumoxid besteht.

6. Vorrichtung zur Zersetzung von Fluorverbindungen, wie PFCs (perfluorierten Kohlenwasserstoffen), HFCs (partiell fluorierten Kohlenwasserstoffen), SF₆ und NF₃, die aufweist:
- einen Reaktor (1), der verbunden ist mit der Quelle für die Fluorverbindungen, einer Inertgas-Versorgungseinheit, einer Wasserdampf-Versorgungseinheit (20) und einer Sauerstoff-Versorgungseinheit (15) zum Einführen von Sauerstoff oder eines Sauerstoff enthaltenden Gases und einen ersten Katalysator (2) zur Zersetzung der Fluorverbindungen und einen zweiten Katalysator (3) zur Zersetzung von schädlichen Substanzen, wie CO, N₂O und SO₂F₂ aufweist, die darin eingebracht sind, wobei der erste Katalysator (2) stromauf vom zweiten Katalysators (3) vorgesehen ist, und der eine Heizeinrichtung (4) zur Beheizung des ersten Katalysators (2) aufweist,
und
- einen Gaswaschturm (7), der mit dem Reaktor (1) verbunden ist und Sprühdüsen (13) zum Inkontaktbringen des aus dem Reaktor (1) abgeführten Gases mit Wasser oder einer alkalischen wässerigen Lösung zur Entfernung von Fluorwasserstoff und anderen wasserlöslichen Verbindungen aus dem Gas aufweist,
wobei
- die Sauerstoff-Versorgungseinheit (15) stromauf vom zweiten Katalysator (3) und stromab vom ersten Katalysator (2) vorgesehen ist,
- der erste Katalysator (2) aus Al-Ni-Oxid, Al-Zn-Oxid oder Al-Ti-Oxid besteht,
- der zweite Katalysator (3) einen Träger aufweist, der unter Aluminiumoxid, Titanoxid und Zirkoniumoxid ausgewählt ist und mindestens eines der Metalle Pd, Pt, Cu, Mn, Fe, Co, Rh, Ir und Au in Form eines Metalls oder in Form eines Oxids enthält oder bei dem es sich um mit Wolframoxid beschichtetes Titanoxid handelt,
und
- die Heizeinrichtung (4) dem ersten Katalysator (2) und dem zweiten Katalysator (3) gemeinsam ist und so ausgebildet ist, dass sie den ersten Katalysator (2) und den zweiten Katalysator auf der gleichen Temperatur hält.

7. Vorrichtung nach Anspruch 6, **dadurch gekennzeichnet, dass** der zweite Katalysator (3) ausgewählt ist unter Pd und La auf Aluminiumoxid, Pt und La auf Aluminiumoxid, Rh und La auf Aluminiumoxid, Au und La auf Aluminiumoxid, Ir und La auf Aluminiumoxid, Pd auf Aluminiumoxid, Pt auf Aluminiumoxid, Cu auf Aluminiumoxid, Mn auf Aluminiumoxid, Pd und W auf Titanoxid sowie Co auf Aluminiumoxid.

8. Vorrichtung nach Anspruch 6 oder 7, **dadurch gekennzeichnet, dass** der zweite Katalysator (3) aus Pd und La (La₂O₃) auf Aluminiumoxid besteht.

9. Vorrichtung nach einem oder mehreren der Ansprüche 6 bis 8, **dadurch gekennzeichnet, dass** stromauf vom Reaktor (1) eine Vorheizeinrichtung (5) vorgesehen ist.

## Revendications

1. Procédé de décomposition des composés fluorés, tels que les PFC (perfluorocarbones), les HFC (les hydrofluorocarbones), SF₆ et NF₃, comprenant :
(A) l'introduction de vapeur d'eau et d'un gaz diluant inerte dans les composés fluorés,
(B) la mise en contact du mélange gazeux avec un premier catalyseur (2) permettant de décomposer les composés fluorés,
(C) la mise en contact du gaz résultant de l'étape (B) avec un second catalyseur (3) permettant de décomposer les substances nocives, telles que CO, N₂O et SO₂F₂,
et
(D) la soumission du gaz résultant de l'étape (C) à une épuration du gaz avec de l'eau ou une solution aqueuse alcaline pour supprimer le fluorure d'hydrogène et d'autres composants solubles dans l'eau contenus dans le gaz,
dans lequel
- de l'oxygène ou un gaz contenant de l'oxygène est introduit dans le gaz résultant de l'étape (B) et utilisé à l'étape (C),
- le premier catalyseur (2) permettant de décomposer les composés fluorés est de l'oxyde-Al-Ni, de l'oxyde-Al-Zn ou de l'oxyde-Al-Ti,
- le second catalyseur (3) permettant de décomposer les substances nocives comprend un support sélectionné parmi l'alumine, le titane et le zircone et contient au moins l'un des éléments parmi Pd, Pt, Cu, Mn, Fe, Co, Rh, Ir et Au sous la forme d'un métal ou d'un oxyde, ou est du titane recouvert d'oxyde de tungstène,
et
- le premier catalyseur (2) et le second catalyseur (3) sont maintenus à la même température de réaction par un dispositif de chauffage commun (4).

2. Procédé selon la revendication 1, **caractérisé en ce que** la température de réaction du premier catalyseur (2) et du second catalyseur (3) est maintenue dans la plage allant de 650 à 850°C.

3. Procédé selon la revendication 1 ou 2, **caractérisé en ce que** le second catalyseur (3) contient en outre au moins un oxyde sélectionné parmi les oxydes de La et de Ba.

4. Procédé selon l'une quelconque des revendications 1 à 3, **caractérisé en ce que** le second catalyseur (3) est sélectionné parmi Pd et La sur de l'alumine, Pt et La sur de l'alumine, Rh et La sur de l'alumine, Au et La sur de l'alumine, Ir et La sur de l'alumine, Pd sur de l'alumine, Pt sur de l'alumine, Cu sur de l'alumine, Mn sur de l'alumine, Pd et W sur du titane et Co sur de l'alumine.

5. Procédé selon la revendication 4, **caractérisé en ce que** le second catalyseur (3) est Pd et La (La₂O₃) sur de l'alumine.

6. Appareil de décomposition des composés fluorés, tels que les PFC (perfluorocarbones), les HFC (hydrofluorocarbones), SF₆ et NF₃, comprenant :
- une chambre de réaction (1) reliée à l'alimentation en composés fluorés, une unité d'alimentation en gaz inerte, une unité d'alimentation en vapeur d'eau (20) et une unité d'alimentation en oxygène (15) permettant d'introduire de l'oxygène ou un gaz contenant de l'oxygène et comprenant un premier catalyseur (2) permettant de décomposer les composés fluorés et un second catalyseur (3) permettant de décomposer les substances nocives, telles que CO, N₂O et SO₂F₂, contenues à l'intérieur, le premier catalyseur (2) étant prévu en amont du second catalyseur (3), et un dispositif de chauffage (4) permettant de chauffer le premier catalyseur (2),
et
- une tour d'épuration du gaz (7) reliée à la chambre de réaction (1) et comprenant des buses de pulvérisation (13) permettant de faire entrer en contact le gaz évacué de la chambre de réaction (1) avec de l'eau ou une solution aqueuse alcaline permettant de supprimer le fluorure d'hydrogène et d'autres composants solubles dans l'eau contenus dans le gaz,
dans lequel
- l'unité d'alimentation en oxygène (15) est prévue en amont du second catalyseur (3) et en aval du premier catalyseur (2),
- le premier catalyseur (2) est de l'oxyde-Al-Ni, de l'oxyde-Al-Zn ou de l'oxyde-Al-Ti,
- le second catalyseur (3) comprend un support sélectionné parmi l'alumine, le titane et le zircone et contient au moins l'un des éléments parmi Pd, Pt, Cu, Mn, Fe, Co, Rh, Ir et Au sous la forme d'un métal ou d'un oxyde, ou est du titane recouvert d'oxyde de tungstène,
et
- le dispositif de chauffage (4) est commun au premier catalyseur (2) et au second catalyseur (3) et est adapté pour maintenir le premier catalyseur (2) et le second catalyseur à la même température.

7. Appareil selon la revendication 6, **caractérisé en ce que** le second catalyseur (3) est sélectionné parmi Pd et Ca sur de l'alumine, Pt et La sur de l'alumine, Rh et La sur de l'alumine, Au et La sur de l'alumine, Ir et La sur de l'alumine, Pd sur de l'alumine, Pt sur de l'alumine, Cu sur de l'alumine, Mn sur de l'alumine, Pd et W sur du titane et Co sur de l'alumine.

8. Appareil selon la revendication 6 ou 7, **caractérisé en ce que** le second catalyseur (3) est Pd et La (La₂O₃) sur de l'alumine.

9. Appareil selon l'une quelconque des revendications 6 à 8, **caractérisé en ce qu'**un dispositif de pré-chauffage (5) est prévu en amont de la chambre de réaction (1).
